# EUROPÄISCHE PATENTANMELDUNG

(11) **EP 1 102 017 A2**
(43) Veröffentlichungstag der Anmeldung: **23.05.2001**
(21) Anmeldenummer: 00125117.2
(22) Anmeldetag: 17.11.2000
(51) Int. Cl.: F24J 2/04, E04D 13/18

(54) **Anordnung zur Befestigung von Glasflächen enthaltende Dachbauelementen**

(30) Priorität: 19.11.1999 DE 29920411 U
(71) Anmelder: Grüterich, Heinz, 99100 Gierstadt (DE)
(72) Erfinder: Grüterich, Heinz, 99100 Gierstadt (DE); Schneider, Günther, 99100 Grossfahner (DE)
(74) Vertreter: Liedtke, Klaus, Dr.

(57) **Zusammenfassung**

Anordung zur Befestigung von Glasflächen enthaltende Dachbauelementen, wobei die Dachbauelemente einen Rahmen mit vier Rahmenteilen (4,6,7) aufweisen, wobei an jedem Rahmenteil (4,6,7) im oberen Bereich ein rinnenförmiges Profilteil befestigt ist, dessen Öffnung zum Dachbauelement gerichtet sind, wobei die an den seitlichen Rahmenteilen 4 angebrachten U-Profile U1 und U2 und das am oberen Rahmenteil 6 angebrachte U-Profil U3 jeweils nach oben und innen abgekantet sind und das am unteren Rahmenteil 7 angebrachte U-Profil U4 nach unten abgekantet ist, und dass in die U-Profile (U1 ... U4) Falze von Abdeckblechen mit umgefalzten Außenkanten formschlüssig eingreifen und die Verbindung zum benachbarten Dachbausteinen und den Höhenausgleich zwischen U-Profil und Dachbausteinunterkante herstellen.

## Beschreibung

Die Erfindung betrifft eine Anordnung zur Befestigung von Glasflächen enthaltende Dachbauelementen innerhalb und/oder außerhalb von geneigten ebenen Dachflächen, vorzugsweise zur Befestigung von Solarkollektoren, wobei die Dachbauelemente einen rechteckigen Rahmen mit vier fest verbundenen Rahmenteilen aufweisen.

Die erfindungsgemäße Anordnung ist zur Halterung und/oder Abdeckung von Dachbauelementen mit Glasflächen geeignet und wird vorzugsweise bei der Installation von dachintegrierten Solarkollektoren angewendet.

Im Stand der Technik sind verschiedene Vorrichtungen zur Halterung von Solarkollektoren innerhalb und oberhalb von geneigten ebenen Dachflächen unter Verwendung von Profilrahmen bekannt.
Zur Montage vom Solarkollektorsysteme werden unterschiedliche Solarkollektoren für Überdachmontage und dachintegrierte Montage verwendet. Nachteilig ist dabei der mit der Herstellung unterschiedlicher Solarkollektoren verbundene hohe Produktions- und Montageaufwand. Es ist auch bekannt, dachintegrierte Solarkollektorsysteme mit Blecheinfassungen zu versehen.

Nachteilig ist dabei, dass zur Eindichtung der an einer Dachkonstruktion befestigten Solarkollektoren aufwendige Blecheinfassungen erforderlich sind, die zumeist in besonders zeit- und kostenintensiver Weise vor Ort hergestellt werden müssen und die nur schwer demontiert werden könne, wodurch Reparaturarbeiten erschwert werden.

Der Erfindung liegt die Aufgabe zugrunde, eine Anordnung der eingangs genannten Art anzugeben, bei der mit einfachen Mitteln sowohl eine sichere Befestigung der Dachbauelemente als auch eine zuverlässige Abdichtung erreicht wird und die eine reparaturfreundliche leichte Lösbarkeit ermöglicht.

Erfindungsgemäß wird die Aufgabe mit einer Anordnung, die die im Anspruch 1 angegebenen Merkmale enthält.

Vorteilhafte Ausgestaltungen sind in den Unteransprüchen angegeben.

Durch die Anordnung spezieller rinnenförmiger Quer- und Längsprofile an den Rändern der Solarkollektoren in Verbindung mit damit abgestimmten, konfektionierten Blechstreifen gelingt die Herstellung einer Systemlösung, die universell für Ausführungen in Überdachmontage sowie für dachintegrierte Solaranlagen einsetzbar ist, ohne dass aufwendige Blech- oder sonstige Einfassungen vor Ort erstellt bzw. angepasst werden müssen. Dabei übernehmen die oberen, seitlichen und unteren rinnenförmigen Rahmenprofile auch Abdichtungsfünktionen zum Dachübergang. Mittels spezieller Blechschiebestreifen erfolgt in einfacher Weise die vollständige Abdichtung zur Dachhaut. Die Blechschiebestreifen übernehmen zusätzlich die witterungsgeschützte Abdeckung für Rohr- und elektrische Leitungen.
Besonders vorteilhaft ist dabei, dass im Reparaturfall einzelne Solarkollektoren innerhalb bereits montierter Solarsolarkollektorenfelder in einfacher Weise ausgetauscht werden können.

Die Erfindung wird im Folgenden anhand von zwei Ausführungsbeispielen näher erläutert. Die Beispiele beschreiben die Anwendung der Anordnung für Solarkollektoren.

In den zugehörigen Zeichnungen zeigen:
Figur 1 einen höhenlinienparallelen Schnitt durch zwei Solarkollektoren für eine Ausführungsform mit Befestigungshalter auf der Dachkonstruktion,
Figur 2 einen falllinienparallelen Schnitt durch zwei Solarkollektoren für die in Figur 1 erläuterte Ausführungsform,
Figur 3 die perspektivische Darstellung des Solarkollektors für eine weitere Ausführungsform,
Figur 4 eine perspektivische Darstellung eines Abdeckblechs für eine rechte obere Ecke,
Figur 5 eine perspektivische Darstellung eines Abdeckblechs für eine rechte untere Ecke,
die Figuren 6, 7 und 8 obere, untere und seitliche Solarrahmenprofile,
die Figuren 9 einen Abdeckblechstreifen für den Übergang vom Solarkollektor zu oberen Dachbausteinen,
die Figuren 10 einen Abdeckblechstreifen für den Übergang vom Solarkollektor zu unteren Dachbausteinen,
Figur 11 einen Verbindungsblechstreifen zur Längsverbindung zwischen den Solarkollektoren,
Figuren 12 einen Verbindungsblechstreifen zur Querverbindung zwischen den Solarkollektoren,
Figur 13 ein seitlich an den Solarkollektor anzubringendes Anschlussblech,
Figur 14 die Seitenansicht auf ein Profilelement zur Halterung einer Leiter,
Figur 15 die Seitenansicht auf eine Solarkollektoranordnung mit Leiter,
Figur 16 ein Sicherungselement zur Lagesicherung einer Leiter in Form eines Hebels und
Figur 17 die perspektivische Darstellung des Sicherungshebels.

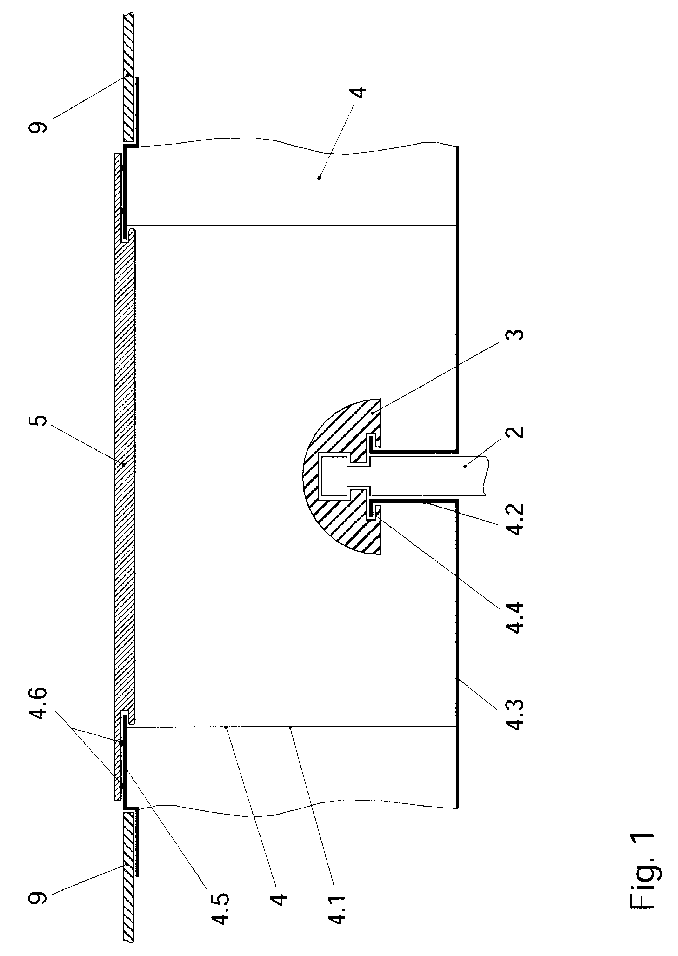

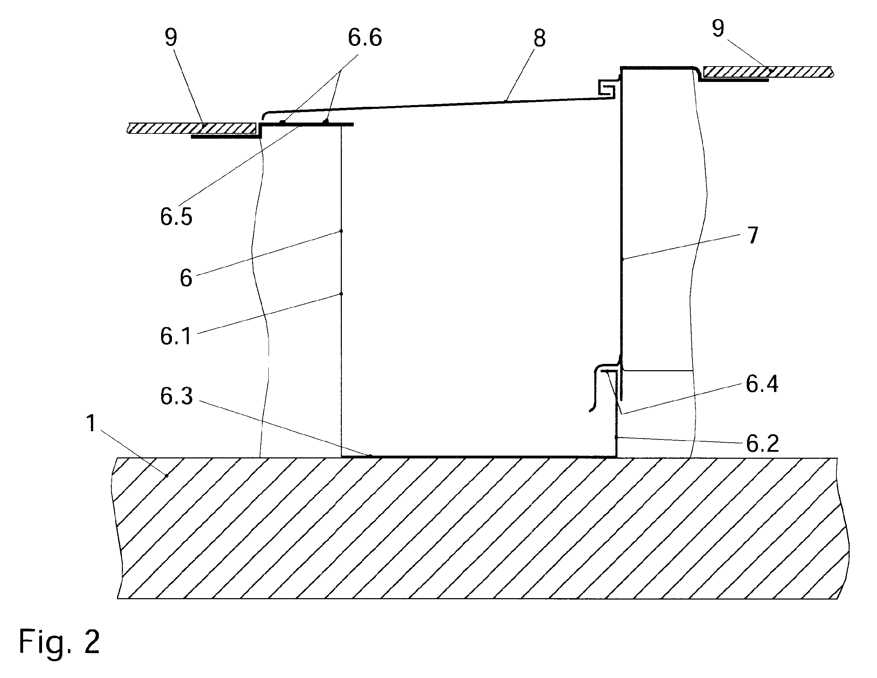

Die Figuren 1 und 2 zeigen ein Schnellmontagesystem mit Befestigungshalter 2, bei dem das seitliche Solarsolarkollektorrahmenprofil 4 und das obere Solarsolarkollektorrahmenprofil 6 einheitlich ausgeführt sind.

In Figur 1 ist ein falllinienparallel an der Dachkonstruktion 1 stehend befestigter Befestigungshalter 2 dargestellt, der im oberen Bereich seiner Seitenflächen zwei Nuten aufweist. Die Befestigungshalter 2 sind sowohl zwischen den Solarkollektoren als auch seitlich neben den äußeren Solarkollektoren angeordnet. Der seitliche Abschluss der Solarkollektoren wird durch die rinnenförmige Längsprofile 4 gebildet, wobei die Rinnen 4 aus jeweils zwei stehenden Schenkeln 4.1, 4.2, einem unteren horizontalem Schenkel 4.3 sowie einem oberen horizontalem Schenkel 4.5 mit Sicherheitsprofilkanten 4.6 besteht. Der obere horizontale Schenkel 4.5 dient der Auflagerung der Solarsolarkollektorscheibe 9. Am oberen Ende des äußeren stehenden Schenkels 4.2 befindet sich eine Abwinklung 4.4, die in eine Nut in der Arretierschiene 3 eingreift und somit mittels Formschluss zwischen Abwinklung 4.4, Befestigungshalter 2 und Arretierschiene 3 die Befestigung an der Dachkonstruktion 1 ermöglicht. Die von den beiden seitlichen Rahmen 4 der nebeneinander angeordneten Solarkollektoren gebildete doppelte Rinne ist von einer Längsabdeckleiste 5 abgedeckt, die der Vermeidung von Eisschanzen im Winter, einer Verbesserung des Ablaufes von Regenwasser sowie einer optischen Aufwertung des Solarkollektorensystems dient. Die Längsabdeckleiste 5 weist an ihrer Oberfläche eine rutschsichere Profilierung auf, ist begehbar und weist außerdem Fixpunkte zur Fixierung von Dachleitern auf

In Figur 2 ist der Übergang von zwei Solarkollektoren mit einer parallel zur Traufe angeordneten Querrinne 6 dargestellt. Das rinnenförmige Querprofil 6 ist identisch mit den rinnenförmigen Längsprofilen 4 ausgebildet, wobei die Rinne 6 aus jeweils zwei stehenden Schenkeln 6.1, 6.2, einem unteren horizontalem Schenkel 6.3 sowie einem oberen horizontalem Schenkel 6.5 mit Sicherheitsprofilkanten 6.6 besteht. Der obere horizontale Schenkel 6.5 dient ebenfalls der Auflagerung der Solarsolarkollektorscheibe 9. Die von dem Querprofil 6 gebildete Rinne ist von einer Querdeckleiste 8 abgedeckt, die ebenfalls der Vermeidung von Eisschanzen im Winter, einer Verbesserung des Ablaufes von Regenwasser sowie einer optischen Aufwertung des Solarkollektorensystems dient und an ihrer Oberfläche eine rutschsichere Profilierung aufweist, begehbar ist und Fixpunkte zur Fixierung von Dachleitern aufweist.

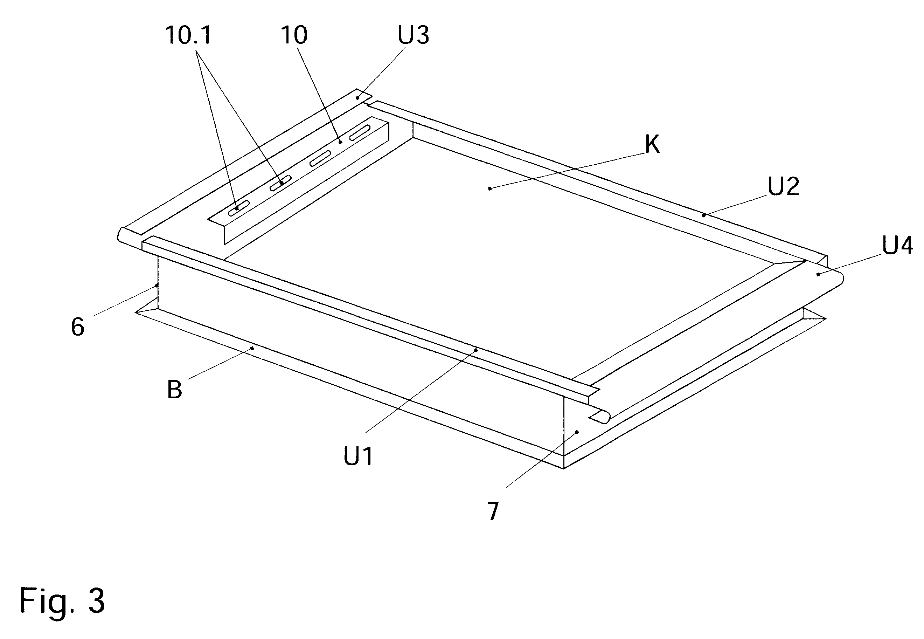

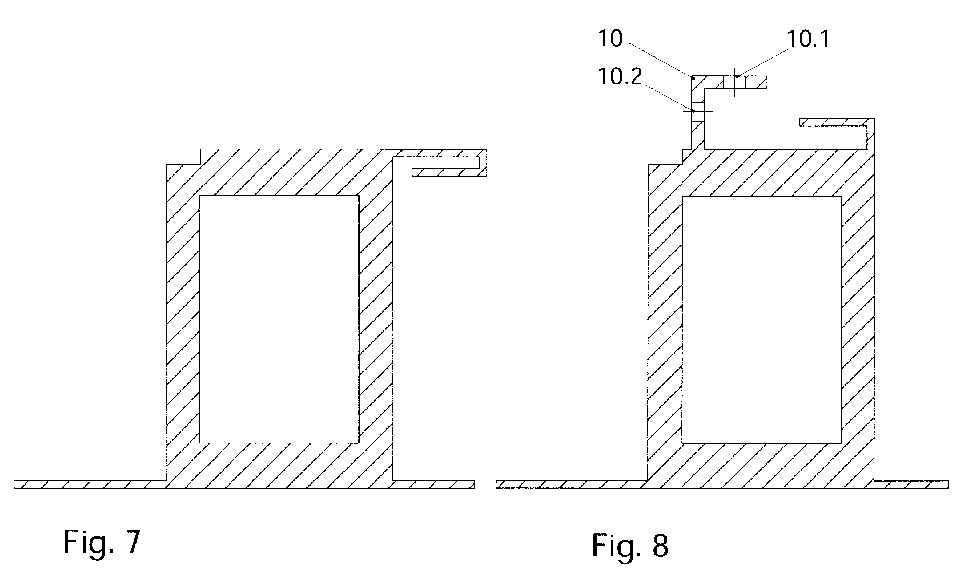

Die Figuren 3 bis 17 erläutern eine weitere Ausführungsform.

Figur 3 zeigt in perspektivischer Darstellung einen Solarkollektor K, bei dem an allen vier Oberkanten seines rechteckigen Rahmens rinnenförmige U-Profile U1 bis U4 und an den Unterkanten Befestigungsprofile B in Form von flache Schienen angeordnet sind. Als Oberkanten werden dabei die dem Dach abgewandten Kanten und als Unterkanten die sich auf der Dachseite des Solarkollektors befindenden Kanten bezeichnet. Die an den seitlichen Rahmenteilen 4 angebrachten U-Profile U1 und U2 sind jeweils nach oben und innen abgekantet, so dass ihre Öffnungen zum Solarkollektor K gerichtet sind. An der Oberkante des oberen Rahmenteils 6 ist das rinnenförmige U-Profil U3 angebracht, das ebenfalls nach oben und innen abgekantet ist. An der Oberseite des Sollarsolarsolarkollektors befindet sich zusätzlich eine in Form eines L-Profils ausgebildete Leiterhalteschiene 10, parallel zur Dachfläche verläuft und mit Schlitzen 10.1 versehen ist. An der Oberkante des unteren Rahmenteils 7 ist das rinnenförmige U-Profil U4 angebracht, das nach unten und innen abgekantet ist
In die rinnenförmigen U-Profile U1 ... U4 greifen die abgekanteten Falze der Abdeckblechstreifen ein.

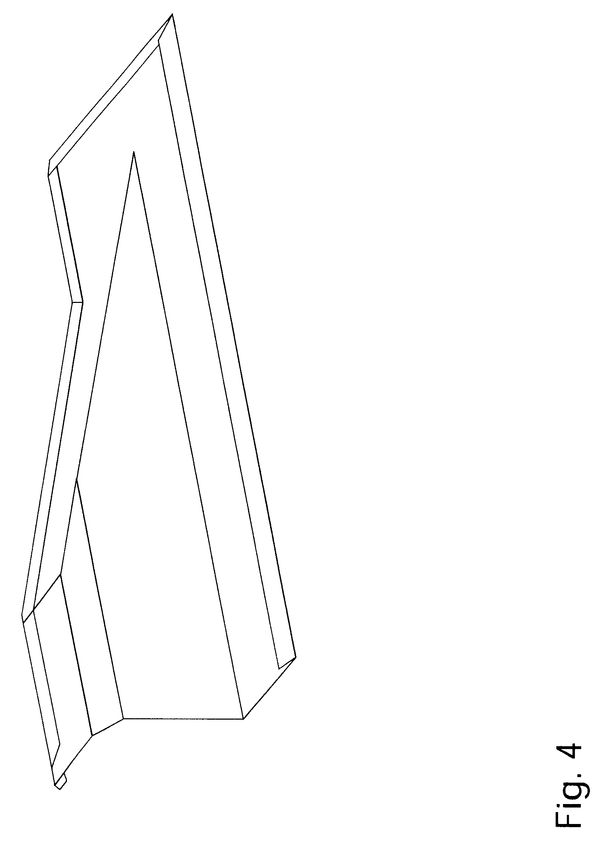

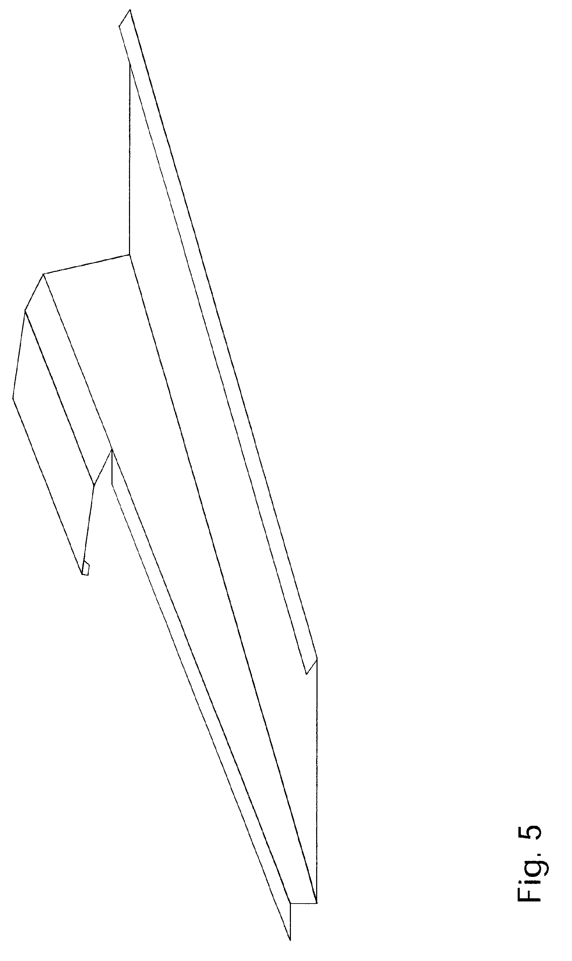

Die Figuren 4 und 5 zeigen die Ausbildung eines Abdeckblechs für eine rechte obere Ecke (Figur 4) und eine rechte untere Ecke (Figur 5). Die jeweils linken Ecken sind hierzu spiegelsymmetrisch ausgebildet.

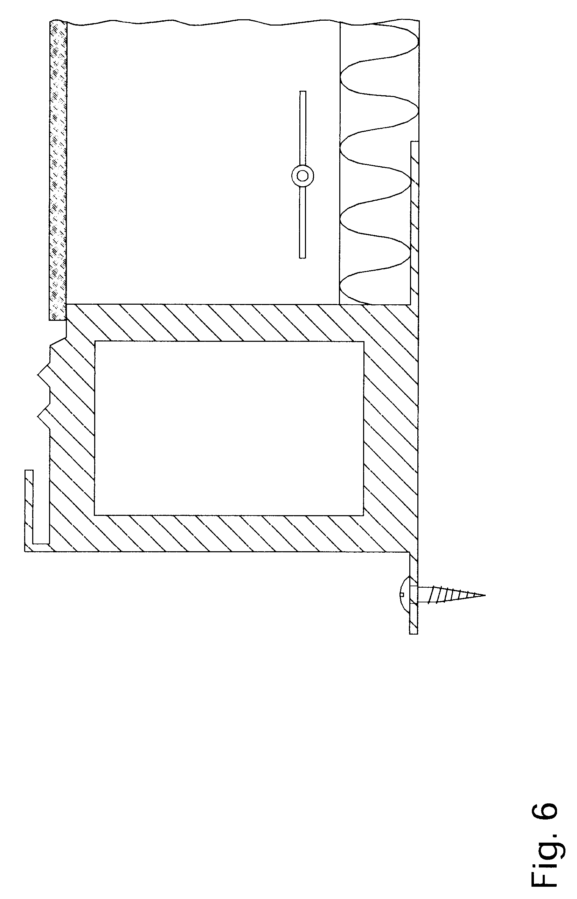

In den Figuren 6, 7 und 8 sind obere, untere und seitliche Solarrahmenprofile dargestellt.

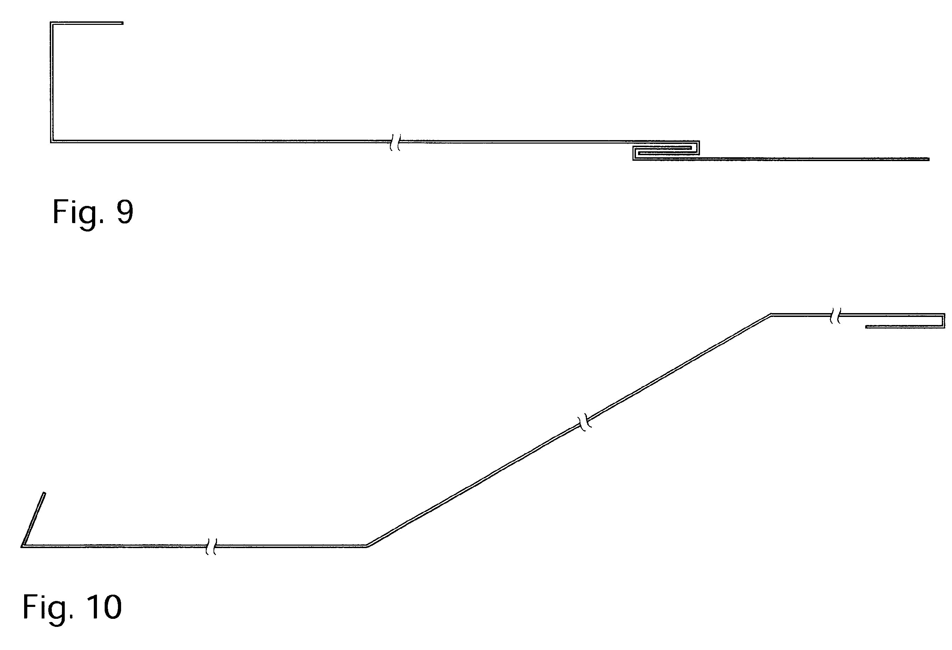

Die Gestaltung eines Übergangsblechstreifens vom Solarkollektor auf die benachbarten Ziegel mit eingefalztem Blech ist in Figur 9 und die Gestaltung eines Übergangsblechs für den Bereich oberhalb des Solarkollektors ist in Figur 10 dargestellt.

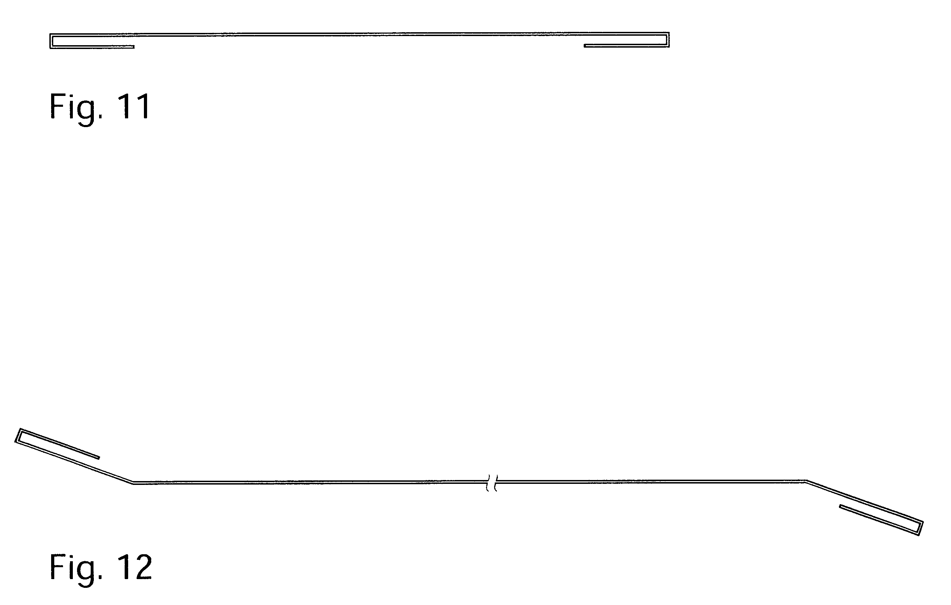

Die Figuren 11 und 12 zeigen längs bzw. quer zwischen den Solarkollektoren angeordnete Verbindungsbleche.

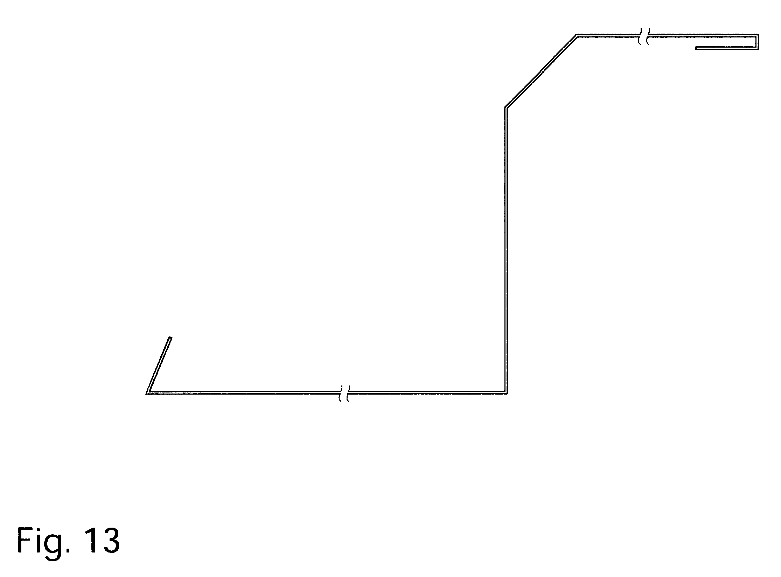

Ein seitlich an den Solarkollektor anzubringender Anschlussblechstreifen ist in Figur 13 angegeben.

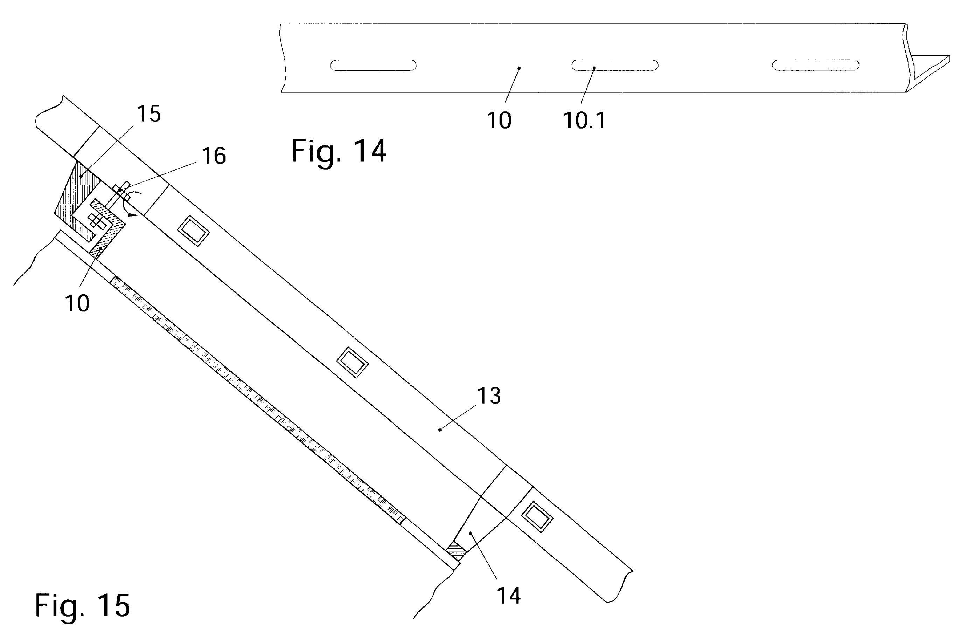

Die Figuren 14 bis 17 erläutern einen Anwendungsfall, bei dem eine Leiter 13 an dem Solarkollektor befestigt werden kann, so dass ein Begehen dieser Flächen sowie das Ausführen von Arbeitsgängen ohne Beschädigung der Glasflächen ermöglicht wird.

In Figur 14 ist die Leiterschiene mit den daran angebrachten Schlitzen 10.1 und 10.2 dargestellt. Diese Schiene dient zur Führung und Fixierung einer Leiter 13. Die Schlitze 10.1 sind an dem Schenkel, der parallel zur Dachfläche verläuft, angebracht und die Schlitze 10.2 an dem dazu rechtwinkligen Schenkel.

Figur 15 zeigt den Einsatz der Leiter 13 an einer Dachfläche, an der ein Solarkollektor angebracht ist. Der Einsatz ist aber auch möglich, bei Arbeiten an Dächern, die anderweitige Glasflächen aufweisen. Die Leiter 13 ist hierzu an ihrem oberen Ende mit einer Leiterhalterung 15 versehen, die im dargestellten Beispiel als L-Profil-Schiene ausgebildet ist. Die Leiterhalterung 15 kann in der Leiterhalterschiene 10 in waagerechter Richtung gleiten und an die gewünschte Position gebracht werden. Im unteren Bereich der Leiter 13 ist eine Leiterabstützung 14 angebracht, die zweckmäßig in Längsrichtung der Leiter verstellbar ist und die an ihrer Unterseite ein rutschfestes Gummiteil aufweist. Damit kann die Leiter an der unteren Kante des Solarkollektors oder an einer anderen geeigneten Stelle abgestützt werden. Um ein sicheres Hantieren des Monteurs zu ermöglichen, verfügt die Leiter über eine Arretiereinrichtung 16, mit der sie an der Leiterschiene 10 so fixiert werden kann, dass ein ungewolltes Lösen verhindert wird. Die Arretiereinrichtung 16 kann beispielsweise, wie dies in Figur 15 angedeutet ist, aus einem schwenkbaren Hebel bestehen, mit dem eine exzentrisch gelagerte Scheibe oder ein Hebel in die Schlitze 10.1 der Leiterhalteschiene 10 einrasten und die Leiter fixieren.

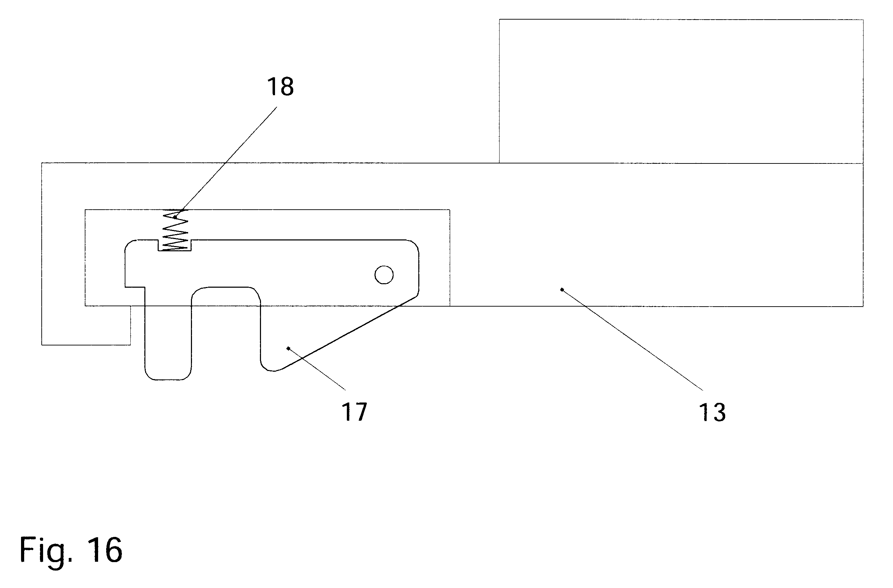

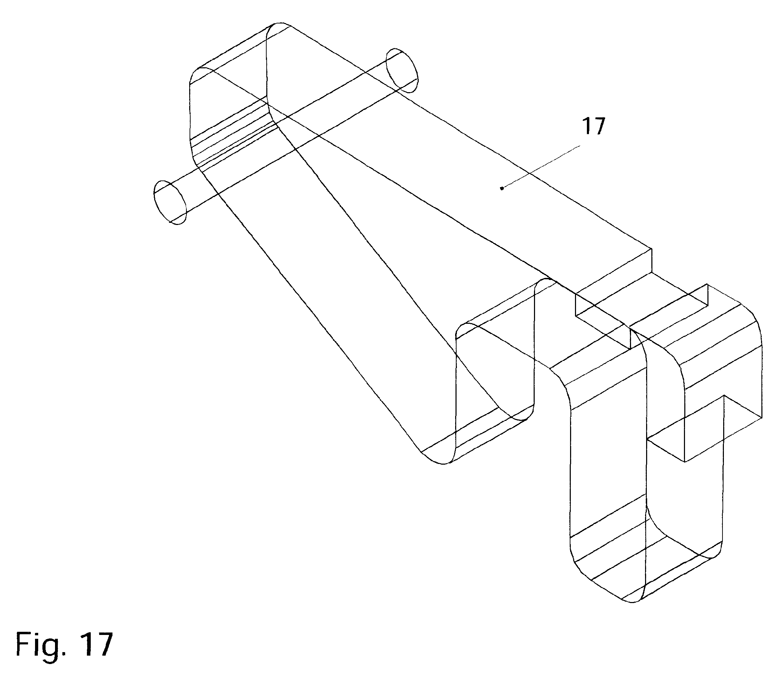

Eine weitere Möglichkeit zur Arretierung der Leiter 13 ist in den Figuren 16 und 17 dargestellt. In der dort gezeigten Anordnung erfolgt die Arretierung dadurch, dass ein Arretierhebel 17 in die Schlitze 10.2 der Leiterschiene 10 eingreifen. Der Arretierhebel 17 ist hierbei schwenkbar gelagert und wird mit Hilfe der Feder 18 nach unten gedrückt, so dass die am Arretierhebel 17 angebrachte Nase in den Schlitz 10.2 der Leiterhalteschiene 10 einrastet.

### BEZUGSZEICHENLISTE

- 1: Dachkonstruktion
- 2: Befestigungshalter
- 3: verschiebbare Arretierschiene
- 4: seitliches Solarsolarkollektorrahmenprofil
4.1 stehender Schenkel
4.2 zweiter stehender Schenkel
4.3 unterer horizontaler Schenkel
4.4 Abwinkelung
4.5 oberer horizontaler Schenkel
4.6 Sicherheitsprofilkanten
- 5: Längsabdeckleiste
- 6: oberes Solarsolarkollektorrahmenprofil
6.1 stehender Schenkel
6.2 zweiter stehender Schenkel
6.3 unterer horizontaler Schenkel
6.4 Abwinkelung
6.5 oberer horizontaler Schenkel
6.6 Sicherheitsprofilkanten
- 7: unteres Solarsolarkollektorrahmenprofil
- 8: Querdeckleiste
- 9: Solarsolarkollektorglasscheibe
- 10: Leiterhalteschiene
10.1, 10.2 Schlitze
- 11: obere U-Profil-Leiste
- 12: untere U-Profil-Leiste
- 13: Leiter
- 14: Leiterabstützung
- 15: Leiterhalterung
- 16: Arretiereinrichtung
- 17: Arretierhebel
- 18: Feder

- K: Solarkollektor
- B: Befestigungsprofil

## Patentansprüche

1. Anordnung zur Befestigung von Glasflächen enthaltende Dachbauelementen innerhalb und/oder außerhalb von geneigten ebenen Dachflächen, vorzugsweise zur Befestigung von Solarkollektoren (K), wobei die Dachbauelemente einen rechteckigen Rahmen mit vier fest verbundenen Rahmenteilen (4,6,7) aufweisen, **dadurch gekennzeichnet**, dass an jedem Rahmenteil (4,6,7) im oberen Bereich ein rinnenförmiges Profilteil befestigt ist, dessen Öffnung zum Dachbauelement gerichtet sind, wobei die an den seitlichen Rahmenteilen 4 angebrachten U-Profile U1 und U2 und das am oberen Rahmenteil 6 angebrachte U-Profil U3 jeweils nach oben und innen abgekantet sind und das am unteren Rahmenteil 7 angebrachte U-Profil U4 nach unten abgekantet ist, und dass in die U-Profile (U1 ... U4) Falze von Abdeckblechen mit umgefalzten Außenkanten formschlüssig eingreifen und die Verbindung zum benachbarten Dachbausteinen und den Höhenausgleich zwischen U-Profil und Dachbausteinunterkante herstellen.

2. Anordnung nach Anspruch 1, **dadurch gekennzeichnet**, dass nebeneinander angeordneten Solarkollektoren (K) zwischen diesen ebene Abdechblechstreifen () mit an zwei gegenüberliegenden Seiten umgefalzten Außenkanten formschlüssig in die seitlichen U-Profile (U1, U2) eingreifen.

3. Anordnung nach Anspruch 1 oder 2, **dadurch gekennzeichnet**, dass bei übereinander angeordneten Solarkollektoren (K) zwischen diesen Abdechblechstreifen () mit an zwei gegenüberliegenden Seiten umgefalzten und gegenläufig abgewinkelten Außenkanten formschlüssig in die U-Profile (U3, U4) des oberen und unteren Rahmenteils (6,7) eingreifen.

4. Anordnung nach Anspruch 1, **dadurch gekennzeichnet**, dass parallel zu den Höhenlinien der Dachfläche zwischen den Dachbauelementen und am oberen Übergang zwischen Dachbauelementen und Dachfläche rinnenförmige Querprofile (6) angeordnet sind, dass rechtwinklig zu den Höhenlinien zwischen den Dachbauelementen und am seitlichen Übergang zwischen Dachbauelement und Dachfläche rinnenförmige Längsprofile (4) formschlüssig

5. Anordnung nach Anspruch 4, **dadurch gekennzeichnet**, dass mittels einer längsverschieblichen Arretierschiene (3) an einem an der Dachkonstruktion befestigten Befestigungshalter (2) befestigt sind und dass die Profile (4,6) an den Dachbauelementen befestigt sind.

6. Anordnung nach einem der vorhergehenden Ansprüche, **dadurch gekennzeichnet**, dass die Längsprofile (4) und die Querprofile (6) baugleich sind.

7. Anordnung nach einem der Ansprüche 4 bis 6, **dadurch gekennzeichnet**, dass die rinnenförmigen Querprofile (6) mit einer Querdeckleiste (8) abgedeckt sind.

8. Anordnung nach einem der Ansprüche 4 bis 7, **dadurch gekennzeichnet**, dass die rinnenförmigen Längsprofile (4) mit einer Schiebeabdeckung (5), die formschlüssig in den Längsprofilen (4) geführt werden und gleiten können, abgedeckt sind.

9. Anordnung nach einem der Ansprüche 4 bis 8, **dadurch gekennzeichnet**, dass an einem oberen etwa horizontalen Schenkel (4.5, 6.5) der rinnenförmigen Rahmenprofile (4,6) abgewinkelte Sicherheitsprofilkanten (4.6, 6.6) angeordnet sind.

10. Anordnung nach einem der vorhergehenden Ansprüche, **dadurch gekennzeichnet**, dass an der Oberseite des Dachbauelementes eine Leiterhalteschiene (10) angeordnet ist, die mit Schlitzen (10.1) zur Aufnahme einer an einer Leiter (13) angeordneten Arretiervorrichtung versehen ist.
